(19) **Europäisches Patentamt / European Patent Office / Office européen des brevets**

(11) **EP 4 404 085 A1**

(12) **EUROPEAN PATENT APPLICATION**

(43) Date of publication:
**24.07.2024 Bulletin 2024/30**

(51) International Patent Classification (IPC):
***G06F 18/22*** *(2023.01)*     ***G06V 10/74*** *(2022.01)*

(21) Application number: **23152321.8**

(52) Cooperative Patent Classification (CPC):
**G06F 18/22; G06V 10/761**

(22) Date of filing: **18.01.2023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Sick IVP AB**
**583 35 Linköping (SE)**

(72) Inventors:
• **KJELLEN, Kevin**
  **585 95 Linköping (SE)**
• **MALMGREN, Christoffer**
  **587 38 Linköping (SE)**
• **MOE, Anders**
  **582 17 Linköping (SE)**
• **ÖFJÄLL, Christoffer**
  **443 61 Stenkullen (SE)**

(74) Representative: **Bergenstråhle & Partners AB**
**P.O. Box 17704**
**118 93 Stockholm (SE)**

(54) **METHOD AND ARRANGEMENTS FOR MATCHING OF OBJECT MODEL INSTANCES WITH IMAGED OBJECT INSTANCES IN AN IMAGE**

(57)     Method and device(s) (400) for matching of object model instances (105a-c) with imaged object instances (103a-c) in an image (101). Said object model instances (105a-c) being instances of an object model (105) of an object. Said matching starts from the object model instances (105a-c) having hypothetical transforms, respectively, in the image (101) for matching with the imaged object instances (103a-c), and wherein said matching is based on transforming respective object model instance (105a;b;c) to more accurately match with respective imaged object instance (103a;b;c) in the image (101). It is obtained (301) predetermined information regarding how the imaged object instances (103a-c) relate to each other in the image (101) in addition to what said object model (105) as such discloses about respective imaged object instance (103a;b;c) in the image (101). Said matching is then performed (302) using said obtained predetermined information.

FIG. 3

**Description**

TECHNICAL FIELD

Embodiments herein concern object matching of object model instances with imaged object instances in an image, where said object model instances are instances of an object model of an object and the matching is based on transforming respective object model instance.

BACKGROUND

A way to describe object matching in an image, that is, visual object matching, is that it is about to find one or several instances of a certain object, in the image, sometimes referred to as a live image, that is, to find out of if the object is present in the image or not, and/or find information about attributes relating to the imaged object when it is present, such as its position, orientation and/or scale in the image. To be able to do the object matching, a matching algorithm used for the object matching is informed, that is, "teached", about the object to find in the image. This is typically done through a model of the object, i.e. an object model, that specifies certain characterizing features of the object to be found, for example its edges.

Some matching algorithms have certain part and/or is associated with a certain separate object model construction algorithm, operating on one or more reference images of the object to thereby be informed, i.e. "learn" or be "teached" about the object to find, and based on that forma an object model that that matching algorithm for the actual matching then uses. Such object model construction algorithm thus constructs an object model for use when the actual matching is to be performed, such as in a live image. The object model is in other words to be used during matching, for example in live images to find one or more instances of the object in the live image. How the object model is formed is separate from the matching as such, although each matching algorithm typically require a certain type of object model for the matching, and e.g. in a particular format. To simplify use and compatibility, it is often practical, although not necessary, that a matching algorithm is associated with an object model construction algorithm.

An object model may thus be generated from reference images imaging a reference object. Such reference images may be called model teach images. The object model can be generated by extracting object features of the reference object as imaged by model teach images. What features specifically are not relevant for the principle and may vary depending on application area, and may also depend on which features are available and possible to extract form the model teach images, and how the matching is to be done. The features should in any case be characterizing for the object to be found and/or be kind of features suitable for the matching with an imaged object instance in an image, for example live image. It should thus be features with correspondence in the image or images that the matching is to be made with. Of course it also matters what features that the matching algorithm can use, which is another reason why it may be beneficial with a matching algorithm that is associated with or may have a function for constructing object models that it can use from one or more reference images of an object, i.e. from model teach images as mentioned above. Example of features of an object model, and that thus also may be features extracted from reference images to construct the object model, are edges or similar characteristic features, for example feature points or landmark points of the imaged reference object, such as corners. A corner as feature points may be in the form of a corner point with surrounding points of an edge comprising the corner.

Features regarding the shape of an object are common. Matching based on object models with shape related features may be referred to as shape-based matching.

It is also possible to construct an object model based on other information about the object than from reference image(s). For example, if the object is a rectangular box and the imaged object instance(s) in the image thereby will have the shape of rectangle(s), the object model may simply be a formed by line segments corresponding to such rectangle.

The object model is then thus used by the matching algorithm in the object matching, e.g. for matching with live images, to find one or more imaged object instances in the image and typically also find information about said attributes regarding respective imaged object instance, such as its position, orientation and/or scale in the image. It is common that the matching algorithm is based on matching different transforms, such as different poses, of respective object model instance with the image and evaluation of the result, for example how well each transform matches with the image. For example, each transform of respective object model instance may correspond to a certain translation or position, rotation, scale, slight adjustment of shape or combinations thereof, of the object model instance. If there is a sufficiently good match according to some criterium or criteria, it is considered to be a match, i.e. that an imaged instance of the object is found in the image and the transformed object model instance resulting in the match provides information about the found image object instance in the image, e.g. its position, orientation and/or scale.

Ideally all matches should be correct ones, i.e. if a match is sufficiently good, the match should always be correct, that is, a match that is an actual match also in reality, not just according to the matching algorithm. However, in practice, this is not always the case. When an object model is used with a matching algorithm to find an object, incorrect matches can occur and cause problems. Incorrect match is thus a match according to the matching algorithm and one or more criteria, such as one or more thresholds, that the matching algorithm applies to determine that it is a match, but that still is not a correct match. A match according to the matching algorithm that is an incorrect match can be determined by some other criterium or criteria than the matching algorithm result is based on, typically outside the matching algorithm, e.g. by human inspection and information about what should actually be found.

An incorrect match may thus be described as a match where the matching algorithm provides a result corresponding to a match according to one or more criteria and the match appear sufficiently accurate for a match according to this, although it is not a correct match. That is, the matching algorithm has failed to provide an actual match or an accurate match, although the algorithm has evaluated there to be a sufficiently accurate match. An incorrect match may thus be described as a match that the matching algorithm is not able to discriminate from a truly correct match.

As already indicated above, matching is sometimes about finding multiple instances of an object in an image, that is, to find all of several imaged object instances in the image using the same object model, for example using several instances of the same object model for the matching. Several different instances of the object model, e.g. one per imaged instance of the object, may be used in the matching. From the matching it can then be provided information about the number of imaged object instances in the image and/or details about each, e.g. position, orientation and/or scale. The resulting information from such matching can be used to, for example in the case of a live image, inform a robot about where real objects are located that corresponds to the found imaged object instances in the live image, for example in order to be able manipulate the corresponding real objects, such as pick and sort them or similar.

Detailed information about an imaged object instance found through the object matching can in general be used for various decisions, some critical and some that requires accurate information about the objects in the image. It may vary depending on the application how accurate it is needed that the matching is and/or how accurate any details resulting from the matching are. The better correspondence between a respective object model instance and respective imaged object instance in the image as result from the matching, the more accurate the matching can be considered to be.

Matching regarding finding multiple instances of an object in an image is often performed in at least two different steps. There may be a first coarser matching step for providing coarser, hypothetical, transforms of object model instances for matching with the imaged object instances in the image and then a subsequent finer matching step starting from the result of the coarser match, i.e. from the hypothetical transforms. These steps may be referred to as coarse matching and fine tuning or fine matching.

The coarser matching can be done by for example making some exhaustive search, such as testing different positions, rotations, etc, of the object model while comparing the object model with the image, for example one object model instance at a time, stopping at sufficient coarse match according some criterium or criteria, testing with a new object model instance, etc. until this and the coarser matching no longer result in any match that is considered sufficiently good to even be a coarse match. Another example of coarser matching is convolving with a rough template of an expected appearance when shape of imaged objects to be found are approximately known or estimated.

In any case, after the coarser matching there are object model instances coarsely matched with image object instances, respectively, in the image and having said hypothetical transforms, such as having hypothetical poses in the image. For some applications this may suffice, but when it is important to get more accurate matching and details about the imaged object instances, said additional finer matching may follow in a further, second, step.

An alternative to coarser matching can be if some information exist on where imaged object instances will or likely will be located in the image and then object model instances can be placed at these locations, automatically or even manually, that thus will correspond to said hypothetical transforms, typically at least including that the object model instances at least are at hypothetical locations and for example with some default dimensions and orientation. The matching that then follows, i.e. corresponding to finer matching, starts from the hypothetical transforms. It is common that such finer matching uses some iterative improvement or optimization to get an improved and thus finer matching, that is, more accurate matching of object model instances to the imaged object instances, respectively.

MVTec HALCON is a standard software for machine vision with an integrated development environment (HDevelop). The publication "Solution Guide II-B Shape-Based Matching", Edition 5 December 2008 (HALCON 9.0), MVTec Software GmbH, München, Germany, discloses some fundamentals regarding shape-based matching as discussed above and exemplifies how HALCON's operators for shape-based matching can be used to find and localize objects based on a single model image. In a first phase, the model to be used is specified and created, and can be stored on file to be reused for matching at different occasions and in different applications. In a second phase, the model is used to find and localize an imaged object. It is also disclosed how outcome can be optimized by restricting the search space.

SUMMARY

In view of the above an object is to provide one or more improvements or alternatives to the prior art, in particular improvements regarding matching of object model instances with imaged object instances in an image, and more particularly when said object model instances are instances of an object model of an object and said matching is based on transforming respective object model instance to more accurately match with respective imaged object instance in the image.

According to a first aspect of embodiments herein, the object is achieved by a method, performed by one or more devices, for matching of object model instances with imaged object instances in an image. Said object model instances are instances of an object model of an object. Said matching starts from the object model instances having hypothetical transforms, respectively, in the image for matching with the imaged object instances, and said matching is based on transforming respective object model instance to more accurately match with respective imaged object instance in the image. Said device(s) obtains predetermined information regarding how the imaged object instances relate to each other in the image, and which predetermined information is in addition to what said object model as such discloses about respective imaged object instance in the image. Said device(s) then performs said matching using said obtained predetermined information.

According to a second aspect of embodiments herein, the object is achieved by one or more devices, that is, device(s), for matching of object model instances with imaged object instances in an image. Said object model instances are instances of an object model of an object. Said matching starts from the object model instances having hypothetical transforms, respectively, in the image for matching with the imaged object instances, and said matching is based on transforming respective object model instance to more accurately match with respective imaged object instance in the image. Said device(s) is configured to obtain predetermined information regarding how the imaged object instances relate to each other in the image, and which predetermined information is in addition to what said object model as such discloses about respective imaged object instance in the image. Said device(s) is further configured to perform said matching using said obtained predetermined information.

According to a third aspect of embodiments herein, the object is achieved by computer program(s) comprising instructions that when executed by one or more processors causes the one or more devices to perform the method according to the first aspect.

According to a fourth aspect of embodiments herein, the object is achieved by carrier(s) comprising the computer program(s) according to the third aspect.

Using said predetermined information in the matching makes it possible to improve object matching by reducing the risk that the matching gets stuck, i.e. ends up, in inaccurate or incorrect matches. In other words, embodiments herein with the predetermined information make it possible to more accurately match respective object model instance to a respective imaged object instance in an image.

BRIEF DESCRIPTION OF THE DRAWINGS

Examples of embodiments herein are described in more detail with reference to the appended schematic drawings, which are briefly described in the following.

Figures 1A-D schematically shows an example regarding prior art based matching that starts from hypothetical transforms of object model instances in an image and then get stuck in inaccurate and/or incorrect matches.

Figures 2A-B shows exemplifying results from matching based om embodiments herein.

Figure 3 is a flowchart for schematically illustrating embodiments of a method and actions according to embodiments herein.

Figure 4 is a schematic block diagram for illustrating embodiments of how one or more devices may be configured to perform the method and actions discussed in relation to Figure 3.

Figure 5 is a schematic drawing illustrating some embodiments relating to computer program and carriers thereof.

DETAILED DESCRIPTION

Embodiments herein are exemplary embodiments. It should be noted that these embodiments are not necessarily mutually exclusive. Components or parts from one embodiment may be tacitly assumed to be present in another embodiment and it will be obvious to a person skilled in the art how those components or parts may be used in the other exemplary embodiments.

As a development towards embodiments herein, the situation in the Background will first be further elaborated upon.

When matching an object model of an object with an image to find and match with respective imaged object instance of the object in the image, it is in practice, for efficiency reasons, common with an at least two step matching as indicated in the Background, that is, with a first coarser matching step followed by at least one finer matching step, or "fine tuning". Respective step may be associated with its own matching algorithm, or it may be a matching algorithm that operates in two separate steps. In any case, from the finer matching perspective, it starts from a situation with object model instances having hypothetical transforms in the image for matching with the imaged object instances, respectively.

It has been found that such finer matching often can get "stuck" with inaccurate transforms of the object model instance e.g. incorrect poses. In other words that the finer matching is not able to accomplish as accurate matching as it should and actually can. This may happen when the result from coarser matching in a previous step is not sufficiently accurate. The finer matching may for example get "stuck" in a match that is incorrect or at least more inaccurate than the matching is capable of. The matching algorithm involved for the finer matching may, but typically do not, know that the result is incorrect or inaccurate. From perspective of the matching algorithm, and matching criteria it applies, it may appear to be a sufficiently good match, although it is not, which easily may be verified by human visual inspection.

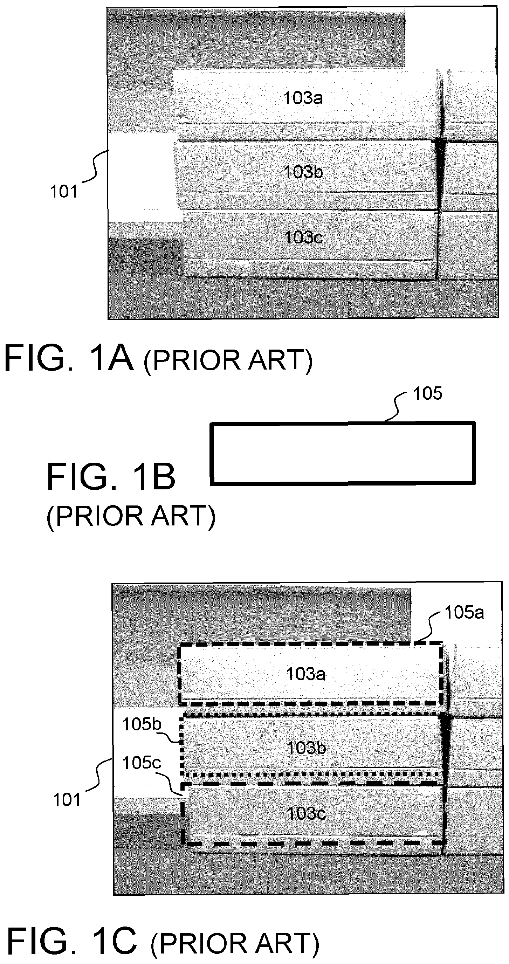

**Figures 1A-D** schematically shows an example regarding prior art based matching that starts from hypothetical transforms of object model instances in an image 101, and that get stuck in undesirable transforms, i.e. the result is matches that are not as correct and accurate as the matching algorithm and object model actually is capable of under other circumstances.

Figure 1A shows the image 101 that matching is to be performed against, with imaged object instances 103a-c that correspond to real objects that are square shaped boxes, such as a parcels, imaged from the side when the boxes are on a support surface and stacked on top of each other.

Figure 1B schematically illustrates a simplified object model 105 in the form of a rectangle that may have been formed by extracting edges from one or more reference images of a single box from the side, or just be formed from known information about the imaged object, for example that they are square shapes boxes with certain width and/or height. The object model may correspond to samples, e.g. along an extracted edge, that may be distributed evenly or unevenly, for example with higher sample density at the corners, or may be formed by line segments corresponding to edges and that may be mathematically described. Further, as should be understood, the object model is in practice in a format, such as conventionally used for object models, compatible with the matching algorithm to use the object mode. The format may be standard or proprietary.

Figure 1C schematically shows object model instances 105a-c of the object model 105 having hypothetical start transforms in the image 101 for matching with the imaged object instances 103a-c. The hypothetical transforms, such as pose including location, in the image may be the result from some conventional coarser matching that have been performed or simply that instances of the object model, that is, here the object model instances 105a-c, have been placed at rough locations in the image where imaged object instances are likely and/or expected to occur. As realized, and as typically is the case in practice, the single object model 105 is not as such having exact dimensions or size of respective imaged object instance to match with. In the shown example, the heights of the object model instances 105a-c are different from the heights of the imaged object instances 103a-c in the image 101. How the size of objects will be imaged in an image may not be known and/or need not be the same as in reference images that the object model may have been formed from. Matching according to a matching algorithm typically involves at least scaling and/or resizing of object model instances in the image, in addition to translation. There may also be rotation and sometimes some adjustment of shape. Respective object model instance 105a-c at respective hypothetical transforms, including location, may be of the same dimensions, e.g. have one and the same nominal or default dimensions and size, and/or my differ in one or more dimensions, as illustrated in Figure 1C. In the figure respective object model instance 105a-c with its hypothetical transform, including hypothetical location, that the further (finer) matching will start from, differs in height compared to the respective imaged object instance 103a-c.

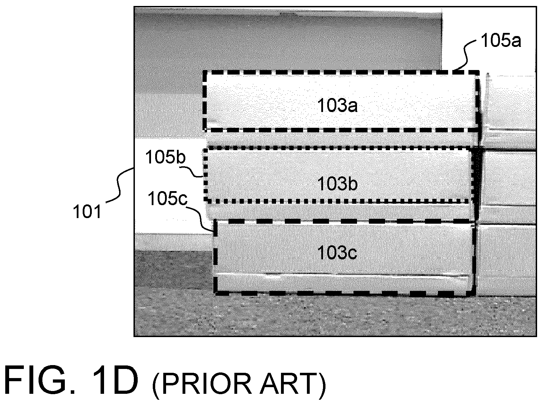

Figure 1D shows result after conventional (finer) matching that started from object model instances 105a-c with hypothetical transforms as in Figure 1C. The matching here has comprised transforms with change of position, width and height of the object model instances 105a-c, attempting to find an optimized position, width and height for each object model instance. This may be done by minimizing distance between object model instance features of respective object model instance (the features here corresponding to edges as explained above) and corresponding features, thus edges, in the image 101. No particular constraints have been used. The optimization can thus be described as minimization of a cost function, which in this case simply can be described according to:

$$CostFunction = \sum DistanceToEdges \qquad\qquad \text{(Eq. 1)}$$

As can be seen in Figure 1D all object model instance 105a-c have, through the performed matching, changed from their hypothetical transforms in Figure 1C. However, the two upper object model instances 105a-b have stuck in a respective transform that represents inaccurate, even incorrect, matches with the imaged object instances 103a-b. The object model instance 105c has on the other hand resulted in a good match with the object model instance 105c.

It may be realized that the inaccurate matches are due to that there is a horizontal fold, or joint, on each box that is visible on each imaged object instance 103a-c as a horizontal line, and that the matching algorithm has treated as an edge that it has performed the matching against.

The kind of incorrect or inaccurate matching as illustrated in relation to Figure 1 may not happen, or at least less frequently, if the hypothetical transforms, e.g. from preceding coarser matching, would be more accurate. One solution may thus be to make preceding coarser matching more accurate but this also counteracts the reason for having the coarser matching in order to be able to start the further matching from transforms of object model instances that correspond to inaccurate matches. Hypothetical transforms to start further matching from can be provided simpler and faster if it suffice that they correspond to rough matches.. Also, for many situations, it is not needed with an accurate coarse matching, the finer matching will work well. Requiring coarser matching to be more accurate may result in suboptimization and overall degradation in performance.

An identified general reason that makes matching to undesirably "stuck" as described above, is if there for some reason are patterns, typically repetitive, in the image that produce fits although not being features of imaged object instances in the image, just as in the example of Figures 1A-D with said folds or joints on each imaged box. In other words, patterns that are similar to features of an imaged object instance and that "fools" the matching algorithm to believe that there is a good match, although it is not, and so that the matching algorithm cannot discriminate the patterns from object features. The patterns thus appear as false object features in the matching. Such patterns may be difficult to avoid in practice and may occur per object instance in the image.

The solution indicated above with more accurate hypothetical transforms to start from, could solve the problem with such patterns if the further, such as finer, matching thereby can avoid matching with the patterns to a greater extent. However, it may happen that increased accuracy of coarser matching with intention to result in better hypothetical transforms for the finer matching to start from, will not solve the problem but even worsen it, if said patterns that appear as false object features fool the coarser matching as well, resulting in that the finer matching starts from hypothetical transforms that may be even closer to the patterns than before and thereby making them even harder to avoid.

In any case, embodiments herein are not based on or requiring that the further matching starts from potentially more accurate or "better" hypothetical transforms of object model instances. Instead embodiments herein are based on a finding that if the coarser and/or finer matching, but in particular the finer matching, or further matching in general, that starts from hypothetical transforms of object model instances, uses predetermined information regarding how the imaged object instances relate to each other in the image, and which predetermined information is in addition to what said object model as such discloses about respective imaged object instance, sub-optimal matching as described in relation to Figure 1D can be avoided and the risk of inaccurate or incorrect matches due to false object features, such as said repetitive patterns, can be reduced. Simple and fast to provide hypothetical transforms of object model instances to start from, e.g. from coarser matching, as in the prior art, can continue to be used.

As should be realized, embodiments herein are applicable when there are multiple object instances in an image since it is about how such instances relate to each the in the image, and when predetermined information of said kind exists.

Existence and kind of useful predetermined information for embodiments herein depends on application and practical circumstances. The predetermined information may need to be identified and be specified based on the application and situation in practice. However, in many, if not most, real situations it is known, and thus exists some information about, how the real objects that will be imaged, for example in a "live image", relate or will relate to each other, and thus how the imaged object instances will relate to each other in the image, whereby this also is relevant for the object model instances in the matching. For example, in a practical application and situation as in Figure 1, it is known that the object instances in the image can and will have no overlap and also that they vertically can and will have no distance between them and this can thus be used as the predetermined information when applying embodiments herein.

More generally, the following are examples of predetermined information that have been identified as applicable and useful in some practical applications and situations, in other words, the predetermined information in embodiments may correspond to or be based on one or more of the following: that the imaged object instances are of or should have the same one or more dimensions in the image, that the imaged object instances have or should have the same rotation in the image, that the imaged object instances have or should have a predefined rotation in the image in relation to one or more closest neighboring imaged object instances in the image, that the imaged object instances have or should have the same shape in the image, that the imaged object instances are or should not overlapping each other in the image, that the imaged object instances in or more directions have or should have no gap between them in the image.

In some embodiments, such as implemented with a cost function as will be exemplified separately below, some deviation from "same" can be tolerated for the predetermined information, which is indicated by the use of "should" in the above listing of various types of predetermined information that may be used with embodiments herein.

In the context above, "same one or more dimensions in the image", refers to that at least one dimension , e.g. imaged object width, or the x-dimension, is the same for the imaged object instances in the image. In another example, both height and width, such as the x- and y-dimensions, are the same for the imaged object instances in the image. Further, above, the "in relation to one or more closest neighboring imaged object instances" refers to in relation to the closest, e.g. most adjacent, in at least one direction in the image. For example, there may be situations where object that are imaged have a tilt determined by and/or in relation to one or more closest neighbors, which will result in that the imaged object instances will appear with different rotations. This information can then be utilized in embodiments herein and be part of said predetermined information.

Some detailed examples will follow below regarding the predetermined information and how it can be applied in the matching.

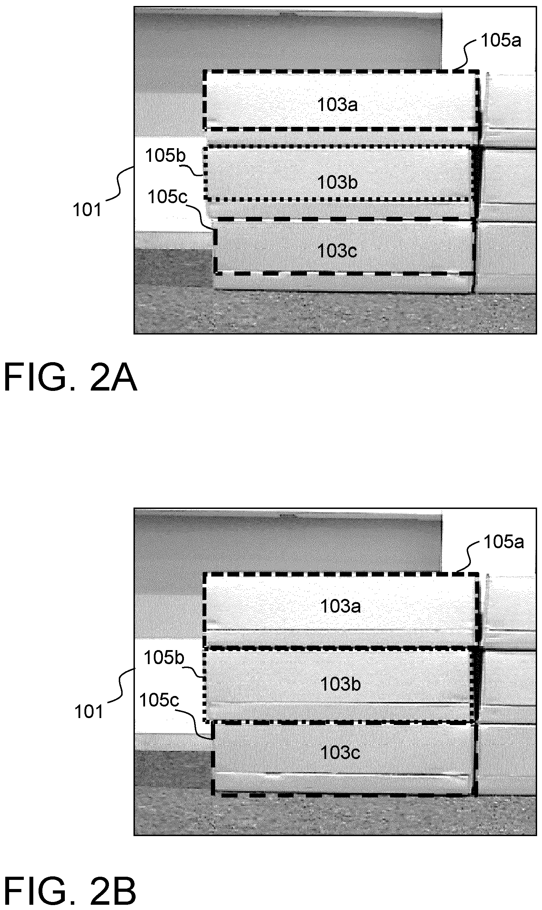

**Figures 2A-B** shows exemplifying results from matching based om embodiments herein. The shown example illustrates how an improving effect can be accomplished based on using such predetermined information as mentioned above. The matching in the example of Figures 2A-B can be considered an extension of the matching discussed above in connection with Figure 1D. The matching that have resulted in what is shown in Figures 2A-B has, just at the matching resulting in Figure 1D, started from object model instances 105a-c with hypothetical transforms as in Figure 1C. Difference lies in that constraint(s) based on predetermined information as mentioned above has/have been applied.

In Figure 2A the constraint is that the imaged object instances 103a-c should be of the same dimensions, here should have the same width and height. This information is added and used when performing the matching that besides this may correspond to the matching that resulted in what is shown in Figure 1D. Implementation of embodiments here may here simply be accomplished by adding an additional second cost function to the cost function according to Eq.1. Hence, a new total cost function for a total cost to be minimized during the matching can be described according to:

$$TotalCostFunction = FirstCostFunction + SecondCostFunction =$$
$$= \sum DistanceToEdges + \sum dimensionDifferences \qquad \text{(Eq. 2)}$$

It is realized that Eq. 2 corresponds to a total cost formed of two cost functions, a first cost function corresponding to the one in Eq.1 and an additional, second cost function regarding cost for deviating from the constraint based on the predetermined information, here deviation from that the imaged object instances 103a-c have the same dimensions. Hence, during the matching, where for example width and height of the object model instances may be changed independent from each other, if the result is a difference in width and/or height between some object model instances, this will result in an additional cost. There is thus a penalty for changes during matching that result in dimension(s) differences, thereby reducing the risk of ending up in a situation as in Figure 1D.

As can be seen in Figure 2A, the result is a difference in matching compared to the result in Figure 1D. The object model instances 105a-c now have approximately the same size, however, the total result is, in this case, not to the better. All object model instances 105a-c have through the performed matching now stuck in inaccurate matches with the imaged object instances 103a-c due to match with patterns caused by the fold on each box.

In Figure 2B a further constraint has been added based on the predetermined information, namely that the imaged object instances 103a-c should have no gaps between them in the image, more specifically that neighboring imaged object instances should have no gap between them vertically. Hence, based on same principle as above, another new total cost function for a total cost to be minimized during the matching can be described according to:

$$TotalCostFunction = FirstCostFunction + SecondCostFunction$$
$$= \sum DistanceToEdges$$
$$+ \sum dimensionDifferences + \sum yGapBetweenBoxes$$
(Eq. 3)

It is realized that Eq. 3 also corresponds to a total cost formed of the first cost function corresponding to the one in Eq.1 and additional, second, cost functions regarding costs for deviating from the constraints based on the predetermined information. The second cost function is here about deviation from that the imaged object instances 103a-c should have the same dimensions and that neighboring imaged object instances should have no gap between them vertically. In the example, there is one second cost function per constraint. As can be seen in Figure 2B, the improvement is clear. All the object model instances 105a-c have resulted in good match with the object model instances 105a-c, respectively.

Hence, in some embodiments, matching, for example corresponding to finer matching discussed above, is, as in the prior art, based on minimizing a suitable cost function, or maximizing some score function. As the skilled person recognizes there are several prior art techniques that can be applied for this. In any case, the minimizing of cost or maximizing of score, for example according to a first cost function, is conventionally typically based on the distance between features, or feature points, of or on respective object model instance to match with the image and corresponding features or feature points in the image, e.g. edges that may be filtered out. The edges in the image will comprise edges of the imaged object instances in the image.

A specific example of a prior art technique that can be used is Iterative Closest Point (ICP), where points of the object model, or respective object model instance, are transformed to the image, that is, to the image with the imaged "live scene" comprising the imaged object instances, and then the distance between the transformed object model points and the closest corresponding points in the image are being minimized.

Another example is minimizing the distance between edges of the object model, or even a reference image can be used directly, and edges found in the image, for example "live image".

A function to minimize a cost can for example be expressed as:

$$Cost(T) = \sum_{i=1}^{TotPoints} dist\left(P_{live}, T(P_{model,i})\right) \qquad \text{(Eq. 4)}$$

Where, T represent a sought transform, including for example translation and rotation, for an object model instance to match with an imaged object instance in the image. P are the feature points, e.g. of edges, and dist(..) is a distance metric used. The cost is here computed for all feature points TotPoints, that is, i=1...TotPoints of the object model, that is for all object model points. It is common to use the distance between respective transformed object model point, here named $T(P_{model,i})$, and a closest corresponding point in the image, for example live image, here named $P_{live}$, as measure. Thus the distance dist(...) above can be expressed as :

$$dist(P_{live}, T(P(model,i))) = \min_{k} |P_{live,k} - T(P_{model,i})| \qquad \text{(Eq. 5)}$$

, where k thus indicates a corresponding image point, e.g. edge point, that has the shortest distance, i.e. is closest, to the transformed object model point. If the transformation T applied involves searching for translation, rotation and size to find the best match, the transform that is sought can be written as:

$$T(t_m, R_m, s_m) \qquad \text{(Eq. 6)}$$

, where m is the object index, that is, different index per object model instance to match with respective imaged object instance. For example, m=1..M if there is an integer M of object model instances. Thus, one transform per each object model instance. These transforms can be sought for one at a time since they are independent of each other.

If a sum is formed as for equations Eq. 4-6 above based on the distances from respective feature points of the object model instance points and the closest corresponding point in the image, this corresponds to a cost to be minimized, as in Eq.1. That is, a transform of respective object model instance, e.g. including translation, rotation and/or resizing, that has the lowest cost is considered to be optimized and be the best match. Ideally the cost should be zero, meaning that a transform has been found where all the feature points of the object model are exactly and at the same time matching a corresponding point in the image and the object model instance has perfectly matched with an image object instance in the image. However, in practice such a perfect match may not be possible to accomplish and typically some threshold or similar is used to determine it a match is good enough and/or after a number of iterations the transform with the lowest cost is used as the "best match".

The above discussion in relation to equations Eq. 4-6 is exemplifying how matching may be performed based on prior art techniques and provides some further details about what such matching as discussed above in relation to Figures 1A-D and Figures 2A-B may be based on.

It will now be discussed how prior art matching as exemplified above can be modified in different ways to implement embodiments herein.

In case of a situation as discussed above in relation to Figures 2A-B, with predetermined information regarding how the imaged object instances relate to each other in the image, and which predetermined information comprises that the imaged object instances are of the same dimensions, for example have same size, the transform as in Eq.6 can instead be written as:

$$T(t_m, R_m, s) \qquad \text{(Eq. 7)}$$

Thus, as indicated by equation Eq. 7, all objects model instances have the same size, or scaling, transformation and thus have the same dimensions. A drawback with this is that it may be needed to optimize the transforms for all objects at the same time, since they now are dependent. This gives a more complex optimization problem which likely results in that solution will execute slower, despite having fewer parameters to optimize. Note that this is just an example.

The predetermined information can be utilized also for other parameter that may be part of a transform. For example, it could be that only a rough shape of objects to be matched is known but it is known that the shape is the same. That is, the predetermined information may comprise that the shape is the same.

An additional or alternative way to use the predetermined information may be as in the examples discussed in relation to Figures 2A-B and equations Eq. 1-5 , that is, to add one or several additional cost or score functions, for example to compute a total cost that the matching strives to minimize.

If there is a conventional, first, cost function, cost(T), e.g. as discussed above based on distances between features of respective object model instance and to corresponding image features, such as edges, and that operates on a transform T that is changed during the matching according to a matching algorithm applied, a total cost function can in general be expressed as:

$$TotalCostFunction(T) = cost(T) + \sum_{n=1}^{N} \mu_n * cost_n(T) \qquad \text{(Eq. 8)}$$

, where $cost_n(T)$ is thus an additional, second, cost function based on the predetermined information. Dependent on the type and nature of the predetermined information there may be formed one or more, that is, N, such additional second cost functions where N is an integer > 0. Each second cost function is typically also dependent on the transform T but of course in another way that the conventional first cost function cost(T). For example, in the example of equation Eq. 3, there are two additional cost functions, thus N=2. A weight factor $\mu_n$ may be used to weight the respective cost that respective cost function evaluates to. A weight can of course be part the respective second cost function $cost_n(T)$ as such, but may be beneficial to have an explicit separate parameter that can be varied during tests to find a suitable balance of costs that are part of the total cost and that results in a sufficient matching improvement, that is, that at least decreases the number of inaccurate or incorrect matches compared to of only the first cost function is used. Suitable weight factors may thus in a specific case, e.g. practical application, such as for a specific machine vision system setup and application, be predetermined through routine testing and experimentation.

Some examples of predetermined, or in other words, a priori, information that respective second cost function can be based on, such as be constructed from:

- Overlap. For example, it may be known for a specific practical application that object instances in the image will or cannot overlap. It may then be a cost formed by a second cost function if and when object model instances overlap each other and the cost may increase with increased overlap.
- Gap. For example, if objects that will be imaged are known to be stacked on top of each other, there should be no gap between them vertically. It may then be a cost formed by a second cost function if there is object model instances has some gap between them vertically and the cost may increase with increased gap. Of course, gap could alternatively or additionally be in other directions than vertically, or instead of no gap it can be a predetermined gap that is or should be the same between all imaged object instances in the image.
- Dimension(s) or size. For example, if objects that will be imaged are known to be of same or approximately the same dimensions or size, e.g. since they are all same kind of object, although the exact dimensions or size may be unknown. It may then be a cost formed by a second cost function if transforms of object model instances result in differences is sizes between object model instances and the cost may increase with increased size differences. Note that size may refer to size in one or more dimensions, such as same width and/or height and/or depth.
- Shape. For example, if objects that will be imaged are known to have the same or approximately the same shape, e.g. since they are all same kind of object, although the exact shape may be unknown. It may then be a cost formed by a second cost function if transforms of object model instances result in differences is shapes between object model instances and the cost may increase with increased shape differences.

The additional cost, i.e. penalty, by deviation from what the predetermined information stipulates may be controlled by said weigh parameters $\mu_n$ . For example, dimension variations that will be allowed in practise can be controlled by a weight factor for a cost function generating the cost for size differences.

For the above examples of predetermined information it is realized that overlap and gap cannot be implemented via the transforms T as such, that is, as discussed in relation to equations Eq. 6-7, but all can thus be implemented by means of suitable additional second cost functions. A benefit with the cost function approach is that it allows for variability, which typically is the case in practise and in a real image between imaged object instances, for example that object are approximately of the same the size and/or shape. A drawback is that there are more unknowns, i.e. variables, which can be a significant computational drawback, particularly in case of many object model instances to match, and thus an image with many imaged object instances to match with. For example, compare the transform of Eq. 6 involving independent translation, rotation and size for each object model instance i of a total number I of object model instances, thus a magnitude 3*I number of i variables, with the transform of Eq. 7 involving independent translation, rotation but size that is the same, thus magnitude of 2*l+1 variables.

As already indicted above, same or corresponding predetermined information can alternatively or additionally be used in a first, coarse, matching step that result in the hypothetical object model instance locations and poses that the (finer) matching thereafter starts from. For example, a first, coarse, matching step, could be based on a template match with different object sizes, and then it is selected the size which collectively gave the best match for all object model instances, that is, gave the best coarse match with imaged object instance in the image. That size may then be used as start size in the finer matching.

A further alternative to the transform and cost function approaches discussed above may be to include the predetermined information in a RAndom SAmple Consensus (RANSAC) matcher. This could be applicable both for coarser matching and finer matching steps. A problem with this RANSAC approach may be to make it sufficiently fast to be of practical interest.

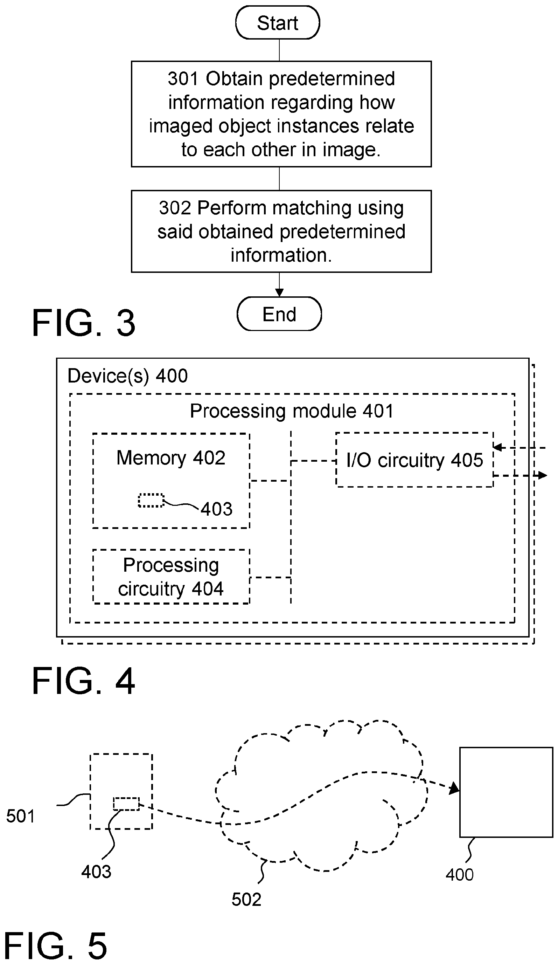

Figure 3 is a flowchart for schematically illustrating embodiments of a method according to embodiments herein. The actions below, that form the method, are for matching of object model instances with imaged object instances in an image. Said object model instances being instances of an object model of an object. Said matching starts from the object model instances having hypothetical transforms, respectively, for matching with the imaged object instances in the image. Said matching is object matching based on transforming respective object model instance to more accurately match with respective imaged object instance in the image, that is, the kind of object matching that is based on transforms of object model instances. In the following, as a non-limiting example for facilitating understanding, said object model may be exemplified by the object model 105, said image by the image 101, said imaged object instances by the imaged object instances 103a-c and said object model instances by the object model instances 105a-c.

The method and/or actions below may be performed by device(s), i.e. one or more devices, such as a computer or a device with similar processing capabilities as a computer, for example a computer or device associated with an imaging system that is providing the image 101 and/or a camera or camera unit with computing capabilities. The device(s) may also have image processing capabilities. The method may thus be computer implemented, although not necessarily performed by a conventional computer. Conventional devices used for performing prior art object matching, such as shape based matching, are typically suitable to be configured to also perform the method and actions according to embodiments herein. Note that, just as in principle any computer implemented method, the method and actions may be performed in a distributed manner involving several computing devices and/or several processors, and/or that the method and/or action can be performed in and/or by a computer cloud, or simply cloud, for example as a cloud service. In such case one or more devices are involved for performing the method and/or actions, such as computations thereof, although it externally can be difficult to identify which specific devices that are involved. Device(s) for performing the method and actions thereof are also described separately below in some further detail.

The actions below may be taken in any suitable order and/or be carried out fully or partly overlapping in time when this is possible and suitable.

### Action 301

Said device(s) obtains predetermined information regarding how the imaged object instances 103a-c, preferably spatially, relate to each other in the image 101 in addition to what said object model 105 as such discloses about respective imaged object instance 103a;b;c in the image 101.

As used herein, imaged object instances that spatially relate to each other in the image includes how the imaged objects and/or charactering features thereof, such as edges, relate to each other in the image regarding how and/or where they are arranged in relation to each other in the image, such as regarding position, orientation, shape, dimension(s), size. Spatial relation thus for example excludes how colors of the imaged objects relate to each other.

### Action 302

Said device(s) performs said matching using said obtained predetermined information.

As already discussed above, using the predetermined information in the matching makes it possible to improve object matching by reducing the risk that the matching gets stuck, i.e. ends up, in inaccurate or even incorrect matches. In other words, the makes it possible to more accurately match a respective object model instance to a respective imaged object instance in an image.

Since the predetermined information is about how the imaged object instances relate to each other in the image, the predetermined information is relevant also for the object model instances being matched with the image since the matching is about making the object model instances correspond to the imaged object instances.

The matching performed using the predetermined information may involve, particularly when the predetermined information is about how the imaged object instances spatially relate to each other in the image, that the transforming of respective object model instance is influenced by, such as takes into account, the predetermined information. For example, as in the examples above, through making the respective transform dependent on each other based on the predetermined information and/or make the transform of respective object model instance to indirectly take into account the predetermined information via the additional, second, cost(s).

In some embodiments, said matching comprises transformations of the object model instances 105a-c that take into account said predetermined information regarding how the imaged object instances 103a-c relate to each other in the image 101. Further, in some of these embodiments, said predetermined information that is taken into account by said transformations comprises that the imaged object instances 103a-c have the same one or more dimensions in the image 101 and/or have the same rotation in the image 101 and/or have a predefined rotation in the image 101 in relation to one or more closest neighboring imaged object instances in the image 101 and/or have the same shape in the image 101.

Examples relating to these embodiments were discussed above in relation to equations Eq. 2-8, particularly Eq. 7.

In some embodiments, said matching comprises minimizing a total cost or maximizing a total score. Said total cost or total score comprising a first cost or score, provided by a first function, regarding distance between predefined object model features and corresponding object features identified in the image to be closest to said predefined object model features of respective object model instance 105a;b;c. Said total cost or total score further comprises one or more second costs or scores, provided by one or more second functions, regarding deviation from how the imaged object instances 103a-c spatially relate to each other in the image 101 according to said predetermined information. Note that since the matching starts from hypothetical transforms of the object model instances in the image, there will be some closest object features that the matching can start from. Examples relating to these embodiments were discussed above in relation to equations Eq. 2-8.

The following further describes principles behind matching in these embodiments, although the principles as such need to be no different from prior art matching based on cost or score optimization, such as score minimization. The difference lies in additional score(s) or cost(s), for example through such additional, second, cost function(s) discussed above. For respective object instance 105a-c starting from its hypothetical transform, e.g. hypothetical location, rotation and size, the object model instance is during the matching, according to the matching algorithm, transformed, for example be slightly translated and/or rotated and/or scaled and/or shape transformed, and a new cost (or score) may be computed for respective transform and thus change, that is, the matching is an iterative process. A decision regarding what and/or degree of what to be changed in each iteration is according to the matching algorithm used and may for example be based on the first function and cost(s) resulting from a transform in a preceding iteration. Said transform and change may depend on if the preceding iteration resulted in a lower or higher cost than before. This procedure as such, i.e. using a cost function and transforming an object model to improve matching, is no different than how it is done conventionally and the matching algorithm can thus be based on known such algorithm based on a (first) cost function. The difference is thus about making the total cost, that the matching algorithm considers, to now also include cost contribution from the second cost function that uses said predetermined information.

Example: If the predetermined information for example stipulates that all object instances should have the same rotation and all object model instances are at their hypothetical transforms, including same rotation, when the further matching starts, rotating a single object model instance, or rotating object model instances differently, in attempt to accomplish a better match by reducing distance and thereby reducing cost according to the first function, means a deviation and therefore adding of a cost according to the second function.. The cost according to the second function may be small for small deviations from "same rotation", but should be large for larger deviations if such are in principle impossible or very unlikely. Note that if the predetermined information only states that all object instances shall have the same relative rotation during the matching of the object model to the object instances, they can all be rotated with the same amount without that this would result in any increased cost according to the second function.

Distance may be as exemplified above, such as distance between the transformed object model points and closest corresponding points in the image, or between edges of the object model and edges found in the image. Yet another example is when the object model is formed from line segments, e.g. mathematically described, where the line segments may correspond to object edges. This may be the case for relatively simple objects, such as boxes In case of a line segment object model, the distance may be an orthogonal distance to such line segment. In that case, respective distance may be from respective feature point in the image, e.g. corresponding to an edge, to one or more such line segments. For example to the line segment with the shortest orthogonal distance, i.e., to the closest line segment, or it may be used distances to all line segments within a certain, typically a predefined or predetermined, locality to respective feature point in the image.

The matching may correspond to a finer matching step as discussed above. Hence, in some embodiments, said matching is a second matching step and said hypothetical transforms of the object model instances 105a-c, that the second matching step starts from, are result from a preceding, first, matching step that has been performed and resulted in said hypothetical transforms.

The first matching step may use said obtained predetermined information. In that case, different and/or same, that is, fully, partly or non-overlapping, parts of the obtained predetermined information may be used in the first and second matching steps. For example the first matching step may use a part of the predetermined information that the imaged object instances 103a-c are of the same size, the second matching step may also use this part of the information and/or that the imaged object instances 103a-c have no gap between them.

As used herein, image with imaged object instances, such as the image 101, may be a 2D or 3D image. For example: A conventional 2D image resulting from conventional (2D) imaging of multiple real world instances of an object assigned with an object model. A 3D image, that is, image data that correspond to a 3D image resulting from 3D imaging, for example from a light or laser triangulation based 3D imaging system 3D image. the 3D image may thus be formed by image information from several 2D images. However, exact how the 3D image has been accomplished is not relevant for embodiments herein. The 3D image may be an image of a 3D scenario comprising real world instances of an object associated with an object model. The 3D image may comprise samples of surfaces in the scenario, for example resulting from a 3D scan of the scenario, such as by a laser in laser triangulation and typically some processing so that the samples will be samples in 3D of what has been scanned, including said real world instances of the object, typically the surfaces thereof. This kind of 3D image can also be referred to as a point cloud, referring to that it can be seen as a 3D space, or cloud, with points, or samples, of 3D surface(s) and thereby 3D information regarding what has been imaged. The points of an imaged object instance in such 3D image can be considered to describe the surface of the imaged object instance. Such surface can be considered to correspond to what is an edge in the 2D case.

Also note that since 3D images contains more information, in yet another dimension, compared to a 2D image. This also means that the meaning of some expression differs if it they are used in a 2D or 3D case. For example, there may be overlap between imaged object instances in a 2D image if one object was party visible behind another object when they are imaged, although the objects in the real, 3D, world were not overlapping, and the objects would thus not be overlapping in a 3D image of the objects. However, since the predetermined information is about how the imaged object instances relate to each other in the image, that in practice is either a 2D or 3D image, this is no problem.

The method and/or actions below may be performed by device(s), i.e. one or more devices, such as a computer or a device with similar processing capabilities as a computer, for example a computer or device associated with an imaging system that is providing the image 101 and/or a camera or camera unit with computing capabilities. The device(s) may also have image processing capabilities. The method may thus be computer implemented, although not necessarily performed by a conventional computer. Conventional devices used for performing prior art object matching, such as shape based matching, are typically suitable to be configured to also perform the method and actions according to embodiments herein. Note that, just as in principle any computer implemented method, the method and actions may be performed in a distributed manner involving several computing devices and/or several processors, and/or that the method and/or action can be performed in and/or by a computer cloud, or simply cloud, for example as a cloud service. In such case one or more devices are involved for performing the method and/or actions, such as computations thereof, although it externally can be difficult to identify specific devices that are involved. Device(s) for performing the method and actions thereof are also described separately below in some further detail.

**Figure 4** is a schematic block diagram for illustrating embodiments of how one or more devices 400, such as already mentioned above, may be configured to perform the method and actions discussed in relation to Figure 3. Hence, the device(s) 400 is for matching said object model instances with said imaged object instances in the image. Said object model instances being instances of said object model of said object, with said matching starting from the object model instances having said hypothetical transforms, respectively, for the matching with the imaged object instances in the image. The matching being object matching based on transforming said respective object model instance to more accurately match with said respective imaged object instance in the image.

The device(s) 400 may comprise processing module(s) 401, such as processing means, one or more hardware modules, including e.g. one or more processing circuits, circuitry, such as processors, and/or one or more software modules for performing said method and/or actions.

The device(s) 400 may further comprise memory 402 that may comprise, such as contain or store, computer program(s) 403. The computer program(s) 403 comprises 'instructions' or 'code' directly or indirectly executable by the device(s) 400 to perform said method and/or action(s). The memory 402 may comprise one or more memory units and may further be arranged to store data, such as configurations, data and/or values, involved in or for performing functions and actions of embodiments herein.

Moreover, the device(s) 400 may comprise processing circuitry 404 involved in processing and e.g. encoding data, as exemplifying hardware module(s) and may comprise or correspond to one or more processors or processing circuits. The processing module(s) 401 may comprise, e.g. 'be embodied in the form of' or 'realized by' the processing circuitry 404. In these embodiments, the memory 402 may comprise the computer program 403 executable by the processing circuitry 404, whereby the device(s) 400 is operative, or configured, to perform said method and/or action(s).

The device(s) 400, e.g. the processing module(s) 401, may comprise Input/Output (I/O) module(s) 405, configured to be involved in, e.g. by performing, any communication to and/or from other units and/or devices, such as sending and/or receiving information to and/or from other devices, for example receiving the image 101, the predetermined information and providing a result from the performed matching. The I/O module(s) 405 may be exemplified by obtaining, e.g. receiving, module(s) and/or providing, e.g. sending, module(s), when applicable.

Further, in some embodiments, the device(s) 400, e.g. the processing module(s) 401, comprises one or more of obtaining and performing module(s), as exemplifying hardware and/or software module(s) for carrying out actions of embodiments herein. These modules may be fully or partly implemented by the processing circuitry 404.

Hence:

The device(s) 400, and/or the processing module(s) 401, and/or the processing circuitry 404, and/or the I/O module(s) 405, and/or the obtaining module(s), are operative, or configured, to obtain said predetermined information regarding how the imaged object instances relate to each other in the image.

The device(s) 400, and/or the processing module(s) 401, and/or the processing circuitry 404, and/or the I/O module(s) 405, and/or the performing module(s), are further operative, or configured, to, perform said matching using said obtained predetermined information.

**Figure 5** is a schematic drawing illustrating some embodiments relating to computer program(s), and carriers thereof, to cause said device(s) 400 discussed above to perform said method and actions.

The computer program(s) may be the computer program(s) 403 and comprises instructions that when executed by the processing circuitry 404 and/or the processing module(s) 401, cause the device(s) 400 to perform as described above. In some embodiments there is provided a carrier, or more specifically a data carrier, e.g. a computer program product, comprising the computer program(s). The carrier may be one of an electronic signal, an optical signal, a radio signal, and a computer readable storage medium, e.g. a computer readable storage medium 501 as schematically illustrated in the figure. The computer program(s) 403 may thus be stored on the computer readable storage medium 501. By carrier may be excluded a transitory, propagating signal and the data carrier may correspondingly be named non-transitory data carrier. Non-limiting examples of the data carrier being a computer readable storage medium is a memory card or a memory stick, a disc storage medium, or a mass storage device that typically is based on hard drive(s) or Solid State Drive(s) (SSD). The computer readable storage medium 501 may be used for storing data accessible over a computer network 502, e.g. the Internet or a Local Area Network (LAN). The computer program 503 may furthermore be provided as pure computer program(s) or comprised in a file or files. The file or files may be stored on the computer readable storage medium 501 and e.g. available through download e.g. over the computer network 502 as indicated in the figure, e.g. via a server. The server may for example be a web or File Transfer Protocol (FTP) server or similar. The file or files may e.g. be executable files for direct or indirect download to and execution on said device(s) to make it/them perform as described above, e.g. by execution by the processing circuitry 404. The file or files may also or alternatively be for intermediate download and compilation involving the same or another processor(s) to make them executable before further download and execution causing said device(s) 400 to perform as described above.

Note that any processing module(s) and circuit(s) mentioned in the foregoing may be implemented as a software and/or hardware module, e.g. in existing hardware and/or as an Application Specific Integrated Circuit (ASIC), a Field-Programmable Gate Array (FPGA) or the like. Also note that any hardware module(s) and/or circuit(s) mentioned in the foregoing may e.g. be included in a single ASIC or FPGA, or be distributed among several separate hardware components, whether individually packaged or assembled into a System-on-a-Chip (SoC).

Those skilled in the art will also appreciate that the modules and circuitry discussed herein may refer to a combination of hardware modules, software modules, analogue and digital circuits, and/or one or more processors configured with software and/or firmware, e.g. stored in memory, that, when executed by the one or more processors may make the device(s), sensor(s) etc. to be configured to and/or to perform the above-described methods and actions.

Identification by any identifier herein may be implicit or explicit. The identification may be unique in a certain context, e.g. for a certain computer program or program provider.

As used herein, the term "memory" may refer to a data memory for storing digital information, typically a hard disk, a magnetic storage, medium, a portable computer diskette or disc, flash memory, Random Access Memory (RAM) or the like. Furthermore, the memory may be an internal register memory of a processor.

Also note that any enumerating terminology such as first device, second device, first surface, second surface, etc., should as such be considered non-limiting and the terminology as such does not imply a certain hierarchical relation. Without any explicit information in the contrary, naming by enumeration should be considered merely a way of accomplishing different names.

As used herein, the expression "configured to" may mean that a processing circuit is configured to, or adapted to, by means of software or hardware configuration, perform one or more of the actions described herein.

As used herein, the terms "number" or "value" may refer to any kind of digit, such as binary, real, imaginary or rational number or the like. Moreover, "number" or "value" may be one or more characters, such as a letter or a string of letters. Also, "number" or "value" may be represented by a bit string.

As used herein, the expression "may" and "in some embodiments" has typically been used to indicate that the features described may be combined with any other embodiment disclosed herein.

In the drawings, features that may be present in only some embodiments are typically drawn using dotted or dashed lines.

When using the word "comprise" or "comprising" it shall be interpreted as nonlimiting, i.e. meaning "consist at least of".

The embodiments herein are not limited to the above described embodiments. Various alternatives, modifications and equivalents may be used. Therefore, the above embodiments should not be taken as limiting the scope of the present disclosure, which is defined by the appending claims.

**Claims**

1. Method, performed by one or more devices (400), for matching of object model instances (105a-c) with imaged object instances (103a-c) in an image (101), said object model instances (105a-c) being instances of an object model (105) of an object, wherein said matching starts from the object model instances (105a-c) having hypothetical transforms, respectively, in the image (101) for matching with the imaged object instances (103a-c), and wherein said matching is based on transforming respective object model instance (105a;b;c) to more accurately match with respective imaged object instance (103a;b;c) in the image (101), wherein the method comprises:

   - obtaining (301) predetermined information regarding how the imaged object instances (103a-c) relate to each other in the image (101) in addition to what said object model (105) as such discloses about respective imaged object instance (103a;b;c) in the image (101); and
   - performing (302) said matching using said obtained predetermined information.

2. The method as claimed in claim 1, wherein said predetermined information is about one or more of the following: that the imaged object instances (103a-c) should have the same one or more dimensions in the image (101), that the imaged object instances (103a-c) should have the same rotation in the image (101), that the imaged object instances (103a-c) should have a predefined rotation in the image (101) in relation to one or more closest neighboring imaged object instances in the image, that the imaged object instances (103a-c) should have the same shape in the image (101), that the imaged object instances (103a-c) should not overlap each other in the image (101), that the imaged object instances (103a-c) in one or more directions should have no gap between them in the image (101).

3. The method as claimed in any one of claims 1-2, wherein the matching comprises transformations of the object model instances (105a-c) that take into account said predetermined information regarding how the imaged object instances (103a-c) relate to each other in the image (101).

4. The method as claimed in claim 3, wherein said predetermined information that is taken into account by said transformations comprises that the imaged object instances (103a-c) have the same one or more dimensions in the image (101) and/or have the same rotation in the image (101) and/or have a predefined rotation in the image (101) in relation to one or more closest neighboring imaged object instances in the image (101) and/or have the same shape in the image (101).

5. The method as claimed in any one of claims 1-4, wherein the matching comprises minimizing a total cost or maximizing a total score, said total cost or total score comprising a first cost or score, provided by a first function, regarding distance between predefined object model features and corresponding object features identified in the image to be closest to said predefined object model features of respective object model instance (105a;b;c), wherein said total cost or total score further comprises one or more second costs or scores provided by one or more second functions regarding deviation from how the imaged object instances (103a-c) relate to each other in the image (101) according to said predetermined information.

6. The method as claimed in any one of claims 1-5, wherein said matching is a second matching step and said hypothetical transforms of the object model instances (105a-c) are result from a preceding first matching step that has been performed and resulted in said hypothetical transforms of the object model instances (105a-c)..

7. One or more devices (400) for matching of object model instances (105a-c) with imaged object instances (103a-c) in an image (101), said object model instances (105a-c) being instances of an object model (105) of an object, wherein said matching starts from the object model instances (105a-c) having hypothetical transforms, respectively, in the image (101) for matching with the imaged object instances (103a-c), and wherein said matching is based on transforming respective object model instance (105a;b;c) to more accurately match with respective object instance (103a;b;c) in the image (101), wherein said one or more devices are configured to:

obtain predetermined information regarding how the imaged object instances (103a-c) relate to each other in the image (101) in addition to what said object model (105) as such discloses about respective imaged object instance (103a;b;c) in the image (101); and
perform said matching using said obtained predetermined information.

8. Computer program (403) comprising instructions that when executed by one or more processors (404) causes one or more devices (400) as claimed in claim 7 to perform the method according to any one of claims 1-6.

9. Carrier comprising the computer program (403) according to claim 8, wherein the carrier is one of an electronic signal, optical signal, radio signal or computer readable storage medium (501).

FIG. 1A (PRIOR ART)

FIG. 1B
(PRIOR ART)

FIG. 1C (PRIOR ART)

FIG. 1D (PRIOR ART)

## FIG. 2A

## FIG. 2B

Start

301 Obtain predetermined
information regarding how
imaged object instances relate
to each other in image.

302 Perform matching using
said obtained predetermined
information.

End

# FIG. 3

Device(s) 400

Processing module 401

Memory 402

403

I/O circuitry 405

Processing
circuitry 404

# FIG. 4

501

403

502

400

# FIG. 5

Europäisches
Patentamt

European
Patent Office

Office européen
des brevets

# EUROPEAN SEARCH REPORT

Application Number

EP 23 15 2321

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/072217 A1 (XU XINYU [US] ET AL) 13 March 2014 (2014-03-13) * figures 1-3, 11,12 * ----- | 1-9 | INV. G06F18/22 G06V10/74 |

TECHNICAL FIELDS
SEARCHED      (IPC)

G06F
G06V

The present search report has been drawn up for all claims

| Place of search | Date of completion of the search | Examiner |
|---|---|---|
| The Hague | 8 June 2023 | Borges, Pedro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 2321

This annex lists the patent family members relating to the patent documents cited in the above-mentioned European search report.
The members are as contained in the European Patent Office EDP file on
The European Patent Office is in no way liable for these particulars which are merely given for the purpose of information.

08-06-2023

| Patent document cited in search report | | Publication date | Patent family member(s) | | Publication date |
|---|---|---|---|---|---|
| US 2014072217 | A1 | 13-03-2014 | JP | 2014056572 A | 27-03-2014 |
| | | | US | 2014072217 A1 | 13-03-2014 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Solution Guide II-B Shape-Based Matching. MVTec Software GmbH, 05 December 2008